# EUROPÄISCHE PATENTSCHRIFT

(11) **EP 1 634 048 B1**
(45) Veröffentlichungstag und Bekanntmachung des Hinweises auf die Patenterteilung: **01.10.2008**
(21) Anmeldenummer: 04728100.1
(22) Anmeldetag: 17.04.2004
(51) Int. Cl.: G01L 19/00, G01L 9/00

(54) **DRUCKSENSOR-ANORDNUNG**
PRESSURE GAUGE ARRAY
DISPOSITIF DETECTEUR DE PRESSION

(30) Priorität: 18.06.2003 DE 10327476
(43) Veröffentlichungstag der Anmeldung: 15.03.2006
(73) Patentinhaber: Conti Temic microelectronic GmbH, 90411 Nürnberg (DE)
(72) Erfinder: ELIPE, Mustafa, 91522 Ansbach (DE); GRAMANN, Matthias, 91233 Neunkirchen (DE); HENNIGER, Jürgen, 91056 Erlangen (DE); WENK, Alexander, 91595 Burgoberbach (DE); KLEMM, Manfred, 90480 Nürnberg (DE)
(74) Vertreter: Pröll, Jürgen
(86) Internationale Anmeldenummer: PCT/DE2004/000806
(87) Internationale Veröffentlichungsnummer: WO 2004/113857

(56) Entgegenhaltungen:
- EP-A- 0 579 308
- DE-A- 19 825 889
- DE-A- 19 834 212
- JP-A- 2003 106 920
- US-A- 5 945 606
- US-B2- 6 523 399

## Beschreibung

Die Erfindung betrifft eine Drucksensor-Anordnung, insbesondere für ein Getriebesteuergerät eines Kraftfahrzeugs. Ein derartiges, einen Drucksensor aufweisendes Steuergerät ist beispielsweise aus der DE 198 34 212 A1 bekannt.

Ein automatisches Getriebe eines Kraftfahrzeugs ist üblicherweise elektronisch gesteuert, wobei ein Steuergerät, insbesondere mit Hybridbaugruppen, direkt an das Getriebe angebaut sein kann. Ein im Steuergerät angeordneter Drucksensor muss den öldruckbeaufschlagten Innenraum des Getriebegehäuses vom Innenraum des Steuergerätes mit dessen elektronischen und/oder hydraulischen Komponenten trennen. Zu diesem Zweck sind typischerweise aufwändige Dichtvorrichtungen vorgesehen.

Der Erfindung liegt die Aufgabe zugrunde, eine Drucksensor-Anordnung, insbesondere für ein Steuergerät eines Getriebes, anzugeben, welche sich durch einen besonders rationellen Aufbau bei einfacher Montagemöglichkeit und gleichzeitig zuverlässiger Dichtfunktion auszeichnet.

Diese Aufgabe wird erfindungsgemäß gelöst durch eine Drucksensor-Anordnung mit den Merkmalen des Anspruchs 1. Hierbei trennt ein Sensorelement einen druckbeaufschlagbaren Innenraum, insbesondere eines Getriebes, von einem Außenraum, in welchem vorzugsweise ein Getriebesteuergerät angeordnet ist. Das Sensorelement ist in einer als Vertiefung ausgebildeten Aufnahmevorrichtung eines Trägerkörpers eingelegt. Die Aufnahmevorrichtung weist einen den Innenraum mit dem Außenraum verbindenden Durchbruch auf, welcher vom Sensorelement, welches im Wesentlichen eine scheibenförmige oder plättchenförmige oder zylindrische Grundform aufweist, abgedeckt ist. An das Sensorelement schließt sich in der Aufnahmevorrichtung radial, entweder nach außen oder nach innen, ein sogenannter Radialdichtabschnitt einer Dichtvorrichtung oder - im Fall deren einteiliger Ausbildung - eines Dichtelementes an, welche beziehungsweise welches weiter einen axial an das Sensorelement in Richtung zum druckbeaufschlagbaren Innenraum anschließenden Axialdichtabschnitt aufweist. Damit ist mit Hilfe einer Dichtvorrichtung, insbesondere eines einzigen Dichtelementes, der Außenraum öldicht vom Innenraum getrennt, wobei ein Längenausgleich sowohl in axialer als auch in radialer Richtung ermöglicht ist. Der Durchbruch des Trägerkörpers ist bevorzugt konzentrisch zur Dichtvorrichtung beziehungsweise zum Dichtelement angeordnet, so dass die Achse des im Allgemeinen kreisrunden Durchbruchs mit der Achse des etwa rotationssymmetrischen Sensorelementes zumindest annähernd zusammenfällt.

Vor der Montage des Trägerkörpers an einem im Allgemeinen größeren Bauteil, beispielsweise Getriebegehäuse, wird das Sensorelement in einer ersten Ausführungsform direkt mit Hilfe des Dichtelementes in der Aufnahmevorrichtung fixiert. Hierbei stellt insbesondere der zum Innenraum hin an das Sensorelement anschließende Axialdichtabschnitt eine Transportsicherungsfunktion für das Sensorelement bereit.

Nach einer besonders bevorzugten zweiten Ausführungsform ist das Sensorelement mittels eines insbesondere aus Kunststoff gefertigten Sockels in der Aufnahmevorrichtung gehalten. Hierbei sind der Axialdichtabschnitt und der Radialdichtabschnitt vorzugsweise zwischen dem Sockel und dem Sensorelement angeordnet. Diese Ausführungsform ist besonders geeignet, um zwei verschiedene Räume innerhalb des Innenraums voneinander zu trennen: Ein erster Teilraum enthält, beispielsweise innerhalb von Hydraulikleitungen, ein erstes Medium, dessen Druck mittels des Sensorelements zu messen ist. Dieses Medium wird, vorzugsweise durch eine den Sockel durchdringende Bohrung, dem Sensorelement zugeführt, wobei die Fläche des Sensorelements, welche vom ersten Medium druckbeaufschlagt wird, vorzugsweise größer ist als der Querschnitt der Bohrung. Weiterhin ist der Sockel zumindest in einem Teil dessen dem Sensorelement abgewandten Bereichs mit einem zweiten Medium, beispielsweise einem Getriebeöl, dessen Druck im Vergleich zum ersten Medium relativ gering ist, druckbeaufschlagbar. Zur Abdichtung des zweiten Mediums gegenüber dem Außenraum ist bevorzugt, gegebenenfalls zusätzlich zu weiteren Dichtvorrichtungen, ein sogenannter Außendichtabschnitt vorgesehen, welcher den Sockel radial umgibt und zwischen diesem und der Aufnahmevorrichtung angeordnet ist.

Der Axial- und/oder Radialdichtabschnitt, insbesondere letztgenannter Dichtabschnitt, haben in der vorstehend beschriebenen Ausführungsform eine Dichtfunktion bei höherem Differenzdruck zu erfüllen als der Außendichtabschnitt. Aus diesem Grund ist eine Bauform der Drucksensor-Anordnung vorteilhaft, in welcher die vom Axial- und Radialdichtabschnitt abzudichtenden Flächen oder Linien geringer dimensioniert sind als die entsprechenden vom Außendichtabschnitt abzudichtenden Bereiche. Dies ist in vorteilhafter Weise dadurch realisiert, dass der Sockel das Sensorelement in der Aufnahmevorrichtung radial umgreift, wobei sämtliche der Dichtabschnitte Radialdichtabschnitt, Axialdichtabschnitt und Außendichtabschnitt an den Sockel grenzen und letztgenannter Dichtabschnitt radial außerhalb der beiden erstgenannten Dichtabschnitte, welche das Sensorelement kontaktieren, angeordnet ist.

In fertigungstechnisch rationeller Weise ist der Radialdichtabschnitt vorzugsweise zusammen mit dem Axialdichtabschnitt sowie dem Außendichtabschnitt als einstückiges Dichtelement ausgebildet. Eine hermetische Abdichtung dieses Dichtelementes gegenüber dem Sockel sowie eine besonders einfache Montagemöglichkeit ist nach einer bevorzugten Weiterbildung dadurch erreicht, dass das Dichtelement einstückig mit dem Sockel, insbesondere als Zweikomponenten-Spritzgussteil, ausgebildet ist.

Das Sensorelement liegt, unabhängig davon, ob ein dieses aufnehmender Sockel vorgesehen ist, im Bereich des Durchbruchs der Aufnahmevorrichtung vorzugsweise von der Seite des druckbeaufschlagbaren Innenraums aus am Trägerkörper an, so dass dieser bei Druckeinwirkung auf das Sensorelement dieses abstützt. Der Durchbruch des Trägerkörpers ist dabei vorzugsweise so gestaltet, dass das Sensorelement, ausschließlich von der Seite des Innenraums aus in die Aufnahmevorrichtung eingelegt werden kann. Der Durchbruch dient insbesondere der Durchführung von Anschlussdrähten vom Sensorelement zur im Außenraum angeordneten Auswerteelektronik.

Der am Sensorelement anliegende Axialdichtabschnitt hat zusätzlich zur Dichtfunktion oder, soweit eine ausreichende Dichtfunktion bereits auf andere Weise, insbesondere durch den Radialdichtabschnitt, gegeben ist, hauptsächlich die Funktion, einen Längenausgleich in axialer Richtung des Sensorelementes und ggf. des Sockels zu ermöglichen. Während das Sensorelement in beschriebener Weise bevorzugt durch das Medium, dessen Druck zu messen ist, in Richtung zum Außenraum gedrückt wird, wird der Sockel durch das selbe Medium vorzugsweise mit einer resultierenden Kraft in entgegengesetzter Richtung beaufschlagt. Dies ist dadurch realisierbar, dass der durch das Medium druckbeaufschlagbaren Fläche des Sensorelementes eine ebenso vom Medium druckbeaufschlagbare Stirnfläche des Sockels gegenüber liegt. Auf der entgegengesetzten, das heißt dem Innenraum zugewandten, Seite des Sockels befindet sich dagegen nur eine kleinere Fläche, die mit dem selben Druck des Mediums, dessen Druck.zu messen ist, beaufschlagt wird, so dass der Sockel nur eine vergleichsweise geringe Kraftkomponente in Richtung zum Außenraum erfährt. Der übrige Teil.der dem Innenraum zugewandten Strin- oder Frontfläche des Sockels ist nur gering, insbesondere durch Getriebeöl, in Richtung zum Außenraum druckbeaufschlagt. Insgesamt ist durch das resultierende Anpressen des Sockels in Richtung zum Innenraum, insbesondere an ein Gehäuse eines Getriebes, eine sehr gute Abdichtung der Drucksensor-Anordnung gegenüber den im Innenraum vorhandenen Medien, insbesondere Getriebeöl, gegeben.

Der etwa ringförmige Radialdichtabschnitt sollte in die Aufnahmevorrichtung leicht einlegbar sein, weiterhin in dieser, insbesondere beim Transport vor dem Zusammenbau, sicher gehalten sein, sowie nach dem Zusammenbau der Drucksensor-Anordnung eine zuverlässige Dichtfunktion gewährleisten. Sämtlichen dieser Anforderungen wird nach einer bevorzugten Ausgestaltung in besonderem Maße dadurch Rechnung getragen, dass der Radialdichtabschnitt mindestens eine Außenrippe, beispielsweise mindestens drei Außenrippen, aufweist. Dies gilt insbesondere, falls der Radialdichtabschnitt zur Anlage an der Umfangswandung der als etwa zylindrische Vertiefung ausgebildeten Aufnahmevorrichtung vorgesehen ist. Ist dagegen der Radialdichtabschnitt radial innerhalb eines ringförmigen Teils des Sensorelementes angeordnet und grenzt dabei an einen dieses aufnehmenden Sockel, welcher außenseitig einen zur Anlage an der Aufnahmevorrichtung vorgesehenen Außendichtabschnitt aufweist, so ist in analoger Weise bevorzugt am Außendichtabschnitt eine Außenrippe vorgesehen.

Zur axialen Abdichtung des Sensorelementes am Axialdichtabschnitt ist bevorzugt ebenfalls eine Rippe auf dem entsprechenden Dichtabschnitt vorgesehen. Ebenso ist auf der dem Sensorelement gegenüberliegenden Seite des Axialdichtabschnitts, soweit dieser nicht dauerhaft mit einem weiteren Bauteil, insbesondere Sockel, verbunden ist, bevorzugt eine Rippe vorgesehen. Diese Rippe dient insbesondere der verbesserten Abdichtung des Axialdichtabschnitts auf einem Bauteil, insbesondere Getriebegehäuse, auf welchem der Trägerkörper zu montieren ist.

Sofern eine Montage des Sensorelementes in definierter Lage relativ zum Trägerkörper erfolgen soll, wird dies nach einer bevorzugten Weiterbildung dadurch erleichtert, dass durch Positionierhilfsmittel sowohl die Winkellage des Dichtelementes relativ zum Trägerkörper als auch die Winkellage des Sensorelementes relativ zum Dichtelement vorgegeben ist. In konstruktiv einfacher Weise sind bevorzugt sowohl an der Außenseite als auch an der Innenseite des Radialdichtabschnittes des Dichtelementes Positionierleisten angeformt, welche in entsprechende Vertiefungen der Aufnahmevorrichtung des Trägerkörpers bzw. des Sensorelementes eingreifen. Sofern das Sensorelement in einem Sockel positionierbar ist, sind Positiönierleisten in analoger Weise am Sockel und/oder am Außendichtabschnitt, insbesondere am mit dem Sockel einstückig ausgebildeten Außendichtabschnitt, vorgesehen.

Der Vorteil der Erfindung liegt insbesondere darin, dass ein einziges Dichtelement einer Drucksensor-Anordnung ein Sensorelement mehrseitig derart umgibt, dass dieses weitgehend spannungsfrei mit einem möglichen Längenausgleich in mehreren Raumrichtungen gelagert ist, wobei zugleich ein von Öl frei zu haltender Raum zuverlässig gegen einen öldruckbeaufschlagten Raum abgedichtet ist.

Nachfolgend werden mehrere Ausführungsbeispiele der Erfindung anhand einer Zeichnung näher erläutert. Hierin zeigen:
- FIG 1a bis 1d: jeweils ein einer schematischen Querschnittsdarstellung ausschnittsweise eine DrucksensorAnordnung,
- FIG 2a bis 2h: ein Dichtelement für eine Drucksensor-Anordnung,
- FIG 3: im Querschnitt eine Drucksensor-Anordnung,
- FIG 4: in perspektivischer Ansicht eine Drucksensor-Anordnung,
- FIG 5: in perspektivischer Ansicht ein Dichtelement,
- FIG 6: in perspektivischer Ansicht einen Trägerkörper,
- FIG 7: in perspektivischer Ansicht ein Sensorelement,
- FIG 8a bis 8d: ausschnittsweise ein Steuergerät mit einer Drucksensor-Anordnung, und
- FIG 9a bis 9d: in verschiedenen Ansichten einen Sockel einer Drucksensor-Anordnung.

Einander entsprechende Teile sind in allen Figuren mit den gleichen Bezugszeichen versehen.

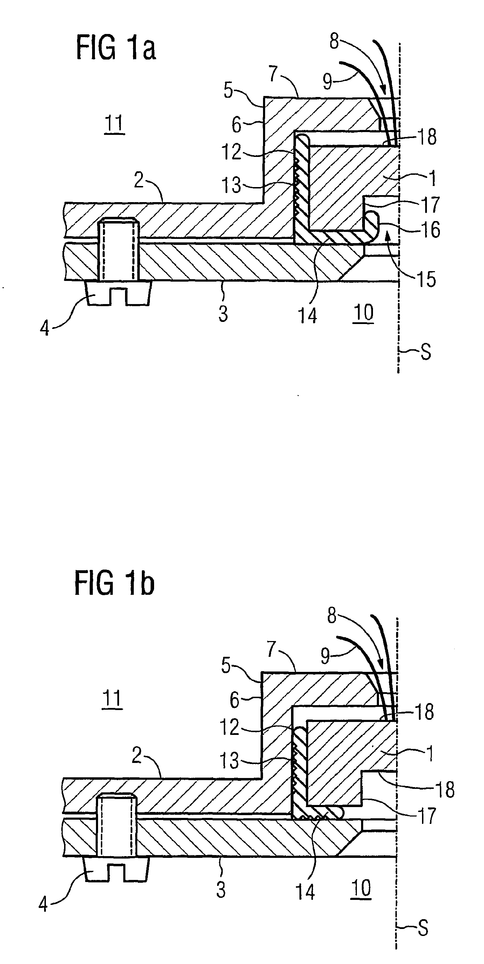

Die FIG 1a und 1b zeigen jeweils ein Ausführungsbeispiel einer Drucksensor-Anordnung mit einem im Wesentlichen aus Keramik gefertigten Sensorelement 1 als Drucksensor, einem Trägerkörper 2 aus Metall und einem Gehäuse 3, insbesondere eines Automatik-Getriebes eines Kraftfahrzeugs, auf welchem der Trägerkörper 2 mittels Schrauben 4 befestigt ist. Das Sensorelement 1 weist eine im Wesentlichen rotationssymmetrische Form auf, wobei eine Symmetrieachse mit S bezeichnet ist. In entsprechender Weise rotationssymmetrisch gestaltet ist eine Vertiefung 5 des Trägerkörpers 2, welche als Aufnahmevorrichtung für das Sensorelement 1 dient. Die Vertiefung 5 weist eine Zylinderwand 6 und eine Bodenfläche 7 auf, wobei sich in dieser symmetrisch zur Symmetrieachse S ein kreisförmiger Durchbruch 8 befindet, durch welchen Anschlussdrähte 9 des Sensorelementes 1 hindurchgeführt sind. Das auf der Bodenfläche 7 aufliegende Sensorelement 1 trennt einen öldruckbeaufschlagten Innenraum 10 von einem ölfreien Außenraum 11, in welchem sich eine nicht dargestellte, an den Anschlussdraht 9 angeschlossene Steuerelektronik befindet. Der Trägerkörper 2 bildet einen Teil des Gehäuses der Steuerelektronik.

Zwischen das Sensorelement 1 und die Vertiefung 5 ist ein dichtelement 12 eingelegt, welches bei zylindrischer Grundform einen radial an das Sensorelement 1 anschließenden Radialdichtabschnitt 13 und einen axial, in Richtung zum Innenraum 10 an das Sensorelement 1 anschließenden Axialdichtabschnitt 14 aufweist. Hierbei hat der Radialdichtabschnitt 13 etwa die Form eines Zylindermantels, während der anschließende Axialdichtabschnitt 14 eine Scheibenform mit einer zentralen kreisrunden Aussparung 15 aufweist, welche einen Durchtritt des Öls vom Innenraum 10 zum Sensorelement 1 ermöglicht. Im Ausführungsbeispiel nach FIG 1a schließt sich an den Axialdichtabschnitt 14 konzentrisch zum Radialdichtabschnitt 13 ein Ringabschnitt 16 an, welcher einen Außenring 17 des Sensorelementes 1 umgreift, jedoch nicht bis zu einer Grundplatte 18 des Sensorelementes 1 reicht.

Während der Radialdichtabschnitt 13 zwischen der Zylinderwand 6 der Vertiefung 5 und dem Außenring 17 des Sensorelementes 1 angeordnet ist, ist der Axialdichtabschnitt 14 zwischen dem Außenring 17 und dem Gehäuse 3 eingespannt. Damit ist der Außenraum 11 gegenüber dem Innenraum 10 öldicht abgedichtet, wobei sowohl ein Toleranzausgleich in axialer Richtung des Sensorelementes 1, d.h. in Richtung längs der Symmetrieachse S als auch in radialer Richtung, d.h. normal zur Symmetrieachse S ermöglicht ist.

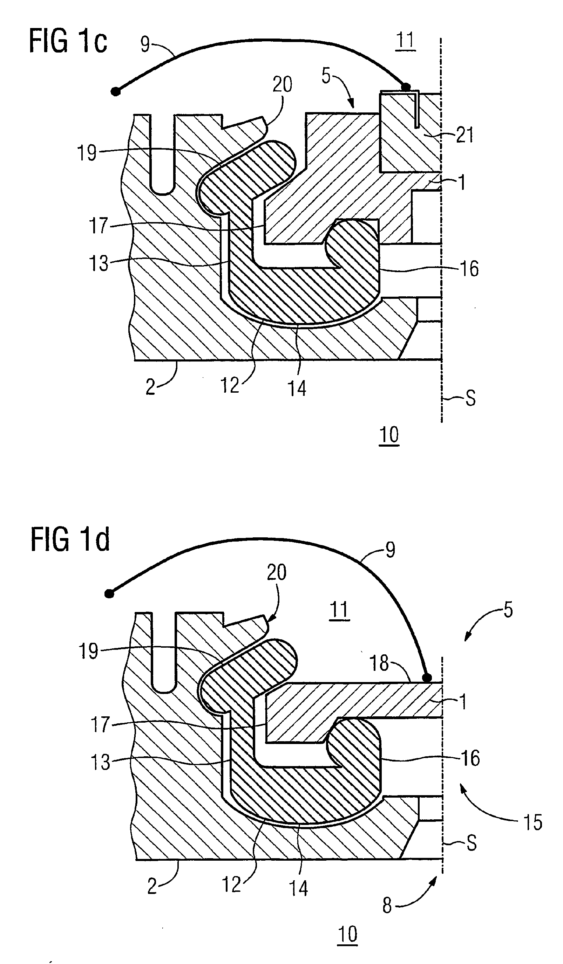

In den Ausführungsbeispielen nach den FIG 1c und 1d ist jeweils ein Dichtelement 12 sichtbar, welches als Teil des Radialdichtabschnitts 13 einen Schrägdichtabschnitt 19 aufweist. Entsprechend dieser im Vergleich zu den Ausführungsbeispielen nach den FIG 1a und 1b aufwändigeren Gestaltung des Dichtelementes 12 weist in diesem Fall auch der Trägerkörper 2 eine komplexere Geometrie auf. Ein Herausdrücken des Sensorelementes 1 zum Außenraum 11 wird durch mehrere über den Umfang verteilte Haltenasen 20 verhindert. Beim Ausführungsbeispiel nach FIG 1c greift der Ringabschnitt 16 des Dichtelementes 12 direkt in den Außenring 17 des Sensorelementes 1 ein, während beim Ausführungsbeispiel nach FIG 1d das Sensorelement 1 eine Form entsprechend den Ausführungsbeispielen nach FIG 1a und 1b aufweist. Eine Membran 21 des Sensorelementes 1 ist lediglich in FIG 1c ausschnittsweise dargestellt, in den anderen Ausführungsbeispielen jedoch in ähnlicher Weise ebenso vorgesehen.

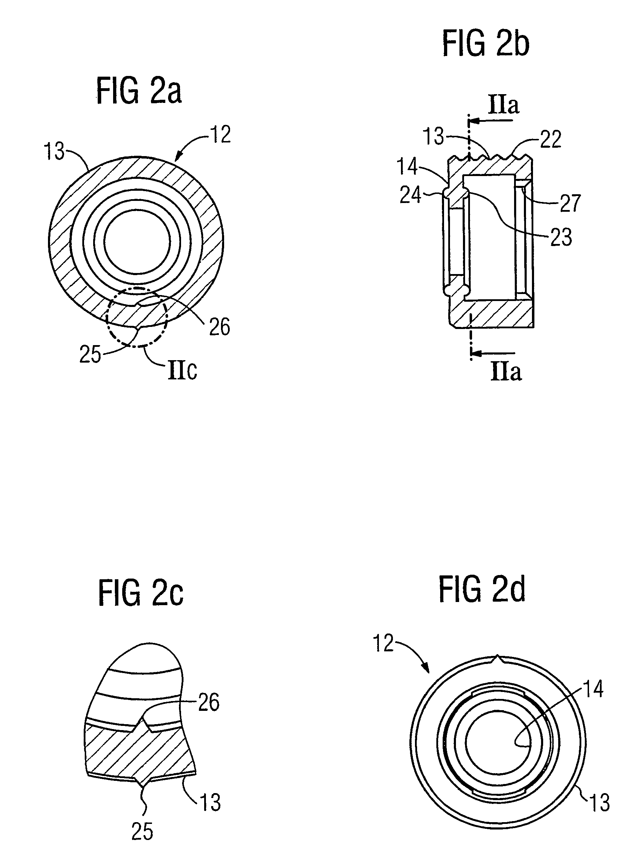

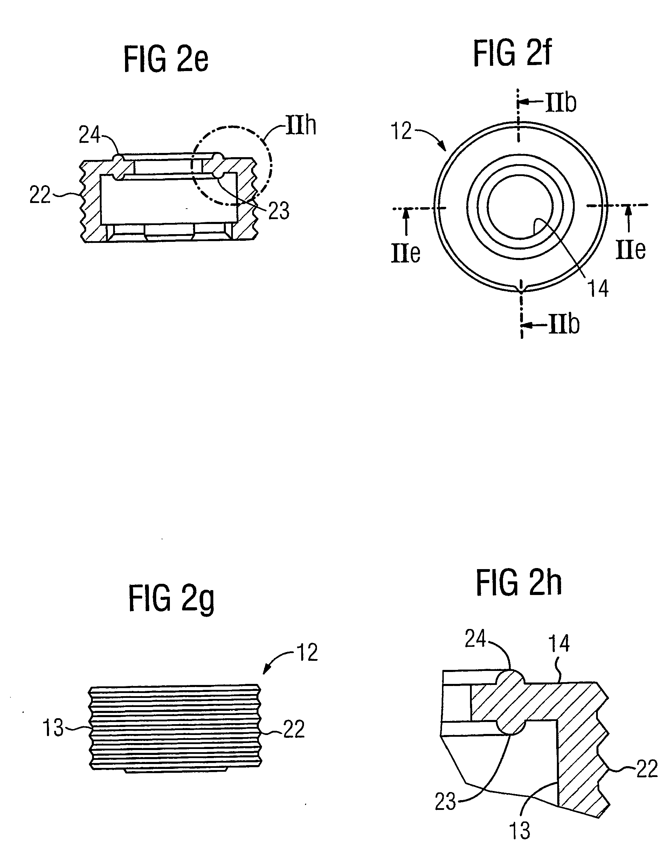

Die FIG 2a bis 2h zeigen das Dichtelement 12 in einer besonders bevorzugten Form. Hierbei weist der Radialdichtabschnitt 13 außenseitig, d.h. der Zylinderwand 6 der Aufnahmevorrichtung 5 zugewandt, mehrere Außenrippen 22 auf. Weiterhin weist der Axialdichtabschnitt 14 eine dem Sensorelement 1 zugewandte innere Rippe 23 sowie eine bei einer Montage nach den FIG 1a und 1b dem Gehäuse 3 zugewandte äußere Rippe 24 auf. Als Positionierhilfsmittel sind ferner eine Positionieraußenleiste 25 und eine Positionierinnenleiste 26 jeweils am Radialdichtabschnitt 13 vorgesehen. Gegenüber des Axialdichtabschnitts 14 befindet sich, ebenfalls an den Radialdichtabschnitt 13 angrenzend, ein weiterer, zur Anlage an der Bodenfläche 7 der Vertiefung 5 vorgesehener Ringdichtabschnitt 27. Das Sensorelement 1 liegt somit nicht direkt an der Bodenfläche 7 der Aufnahmevorrichtung 5 an.

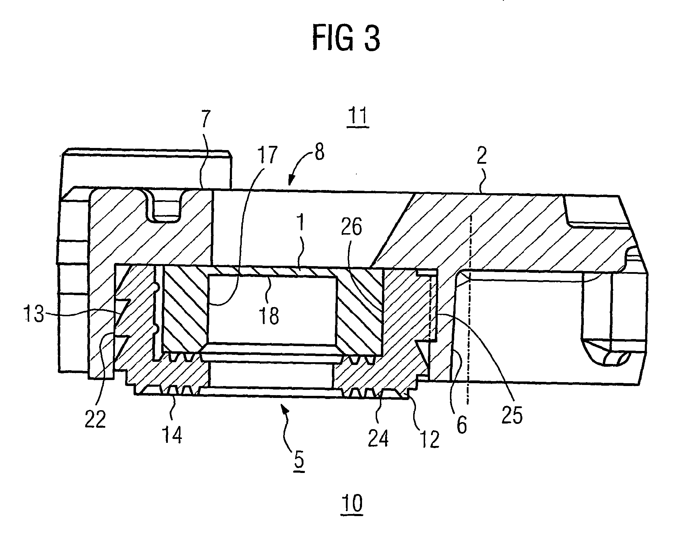

Im Ausführungsbeispiel nach FIG 3 ist ein Sensorelement 1 der in den FIG 1a,1b,1d symbolisch dargestellten Bauart mittels eines Dichtelementes 12 ähnlich der in den FIG 2a bis 2h dargestellten Geometrie im Trägerkörper 2 montiert. Zur Montage wird zunächst das Sensorelement 1 in das Dichtelement 12 eingelegt und anschließend dieses in die Aufnahmevorrichtung 5 eingeschoben. Damit ist das Sensorelement 1 transportgesichert im Trägerkörper 2 gehalten. Eine in FIG 3 nicht dargestellte Gehäusewandung grenzt, analog den Drucksensor-Anordnungen nach FIG 1a und 1b unmittelbar an den Axialdichtabschnitt 14.

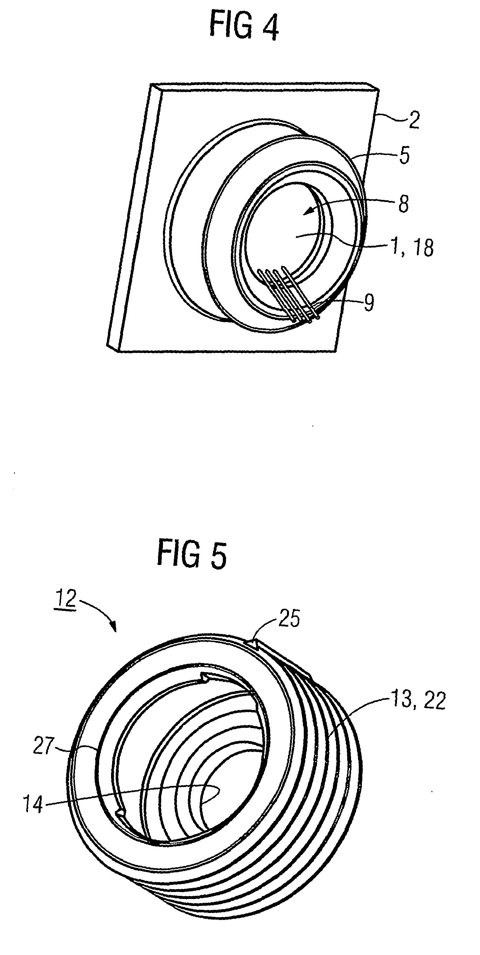

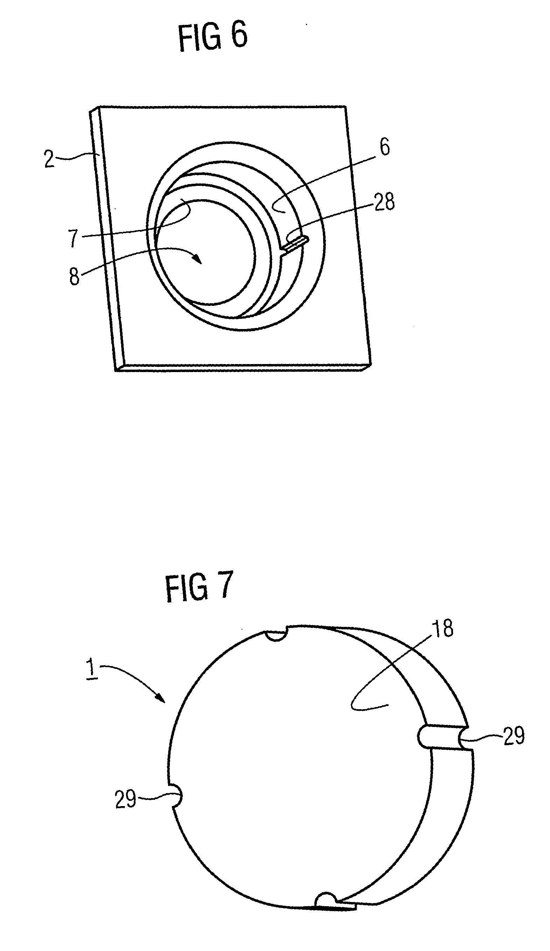

Die FIG 4 bis 7 zeigen jeweils in perspektivischer Ansicht eine vollständige Drucksensor-Anordnung sowie als Teile hiervon das Dichtelement 12, die Trägerplatte 2 sowie das Sensorelement 1. Wie aus FIG 6 hervorgeht, weist der Trägerkörper 2 auf der Innenseite der Zylinderwand 6 eine Nut 28 auf, welche mit der Positionieraußenleiste 25 des Dichtelementes 12 korrespondiert und somit die Winkellage des Dichtelementes 12 in der Vertiefung 5 eindeutig vorgibt. Das Sensorelement 1 weist, wie aus FIG 7 hervorgeht, am Umfang vier jeweils um 90° versetzte Aussparungen 29 auf, welche mit der Positionierinnenleiste 26 des Dichtelementes 12 zusammenwirken und somit eine Montage des Sensorelementes 1 in der Aufnahmevorrichtung 5 in vier definierten Winkellagen ermöglichen.

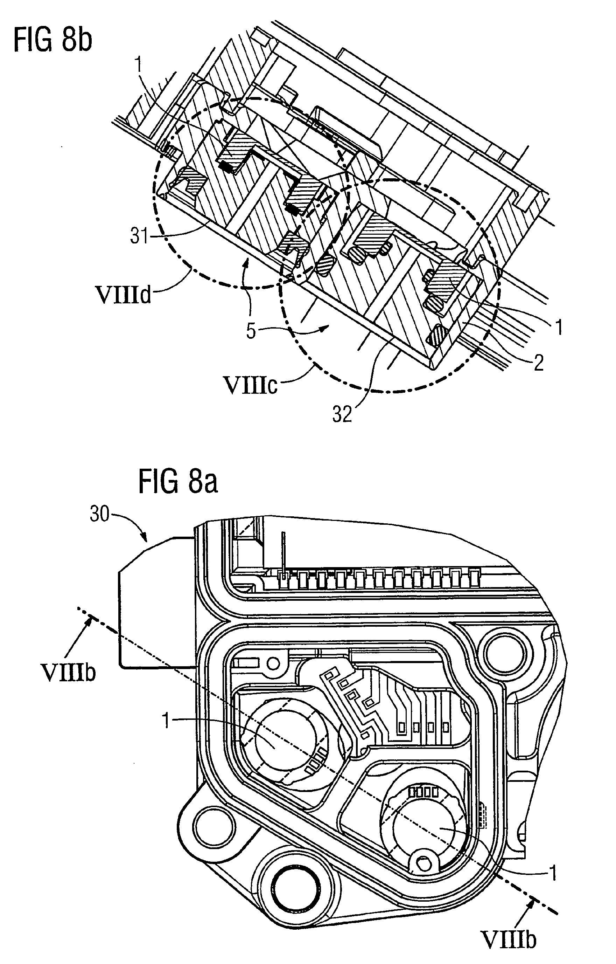

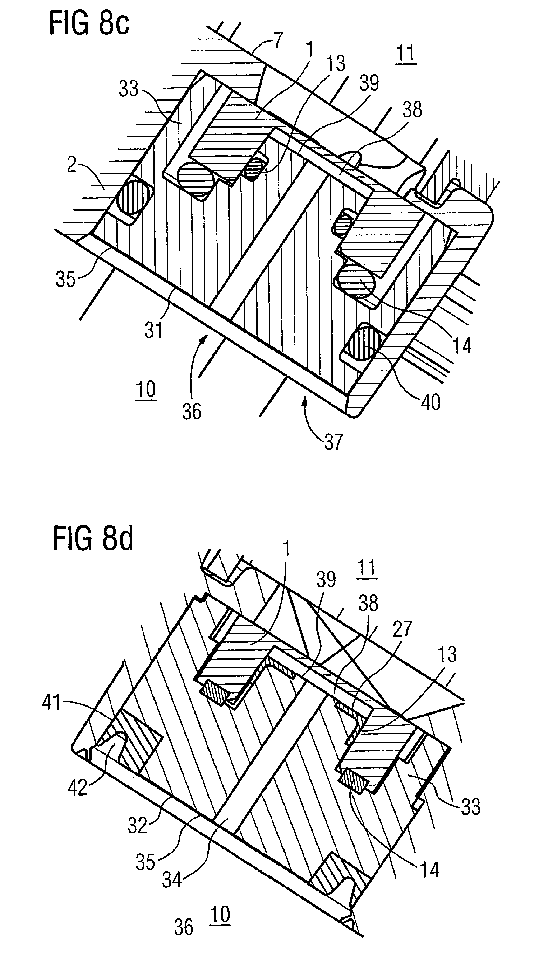

Die FIG 8a bis 8d zeigen ausschnittsweise sowie in verschiedenen Detailschnitten ein Steuergerät 30 als Teil einer Getriebesteuerung. Jeweils ein Sensorelement 1 ist mittels eines Sockels 31,32 in je einer Aufnahmevorrichtung 5 im Trägerkörper 2 des Steuergerätes 30 gehalten. Die Sockel 31,32 umgreifen jeweils mit einer Ringwandung 33 das zugehörige Sensorelement 1 in der Aufnahmevorrichtung 5. Hierbei liegt die Ringwandung 33 im Ausführungsbeispiel nach Fig. 8c nicht und im Ausführungsbeispiel nach Fig. 8d nur teilweise am Sensorelement 1 an, so dass eine ausgleichsmöglichkeit insbesondere für betriebsbedingte Geometrieänderungen gegeben ist.

Längs der Symmetrieachse S ist jeder Sockel 31,32 von einer Bohrung 34 durchdrungen, welche auf der Seite des Innenraums 10 an einer nicht dargestellte Hydraulikleitung angeschlossen ist. Das in der Hydraulikleitung sowie in der Bohrung 34 befindliche Hydrauliköl beaufschlagt jedoch nur einen geringen Teil der Frontfläche 35 des Sockels 31 mit Druck. Im Übrigen steht im Innenraum 10 der Öldruck des Getriebeöls an. Der Innenraum 10 ist somit aufgeteilt in einen die Bohrung 34 einschließenden, auf einen hohen Druck ausgelegten Hydraulikraum 36 sowie einen Ölraum 37 innerhalb des Getriebes mit vergleichsweise geringem Druck, wobei im Ausführungsbeispiel nach Fig. 8c lediglich symbolisch eine Abtrennung zwischen dem Hydraulikraum 36 und dem Ölraum 37 angedeutet ist. Die Bezeichnungen "Hydraulikraum" und "Ölraum" implizieren keinerlei Einschränkung auf bestimmte flüssige oder gasförmige Medien.

An die Bohrung 34 schließt sich in Richtung zum Außenraum 11 ein Druckraum 38 an, in welchem das Hydrauliköl eine Kraft auf das Sensorelement 1 in Richtung zum Außenraum 11 ausübt. Diese der Messung dienende Druckbeaufschlagung presst zugleich das Sensorelement 1 an die Bodenfläche 7 der Aufnahmevorrichtung 5. Damit ist ein Durchtritt von Hydrauliköl und/oder Getriebeöl zum Außenraum 11 praktisch ausgeschlossen.

Das Hydrauliköl im Druckraum 38 bewirkt zugleich eine Druckbeaufschlagung des Sockels 31,32 an einer Stirnfläche 39 in Richtung zum Innenraum 10. Auf der der Stirnfäche 39 gegenüberliegenden Frontfläche 35 des Sockels 31,32 wirken höchstens vergleichsweise geringe, durch das Hydrauliköl und/oder das Getriebeöl erzeugte Kräfte in Richtung zum Außenraum 11, so dass der Sockel 31,32 insgesamt eine resultierende Kraft in Richtung zum Innenraum 10 erfährt. Dies unterstützt die Abdichtung des Sockels 31,32 am Gehäuse des Getriebes. Zur Abdichtung zwischen dem Sockel 31,32 und der Aufnahmevorrichtung 5 ist ein Außendichtabschnitt 40,41 in Form einer Ringdichtung mit kreisförmigem Querschnitt bzw. im Wesentlichen rechteckigem Querschnitt mit Umlaufnut 42 (FIG 8d) vorgesehen.

Die Abdichtung zwischen dem Sockel 31,32 und dem in diesen eingelegten Sensorelement 1 zur Vermeidung eines Flüssigkeitsaustritts aus dem Druckraum 38 ist im Wesentlichen hergestellt durch den Radialdichtabschnitt 13 des in den Ausführungsbeispielen nach den Fig. 8a bis 8d als mehrteilige Dichtvorrichtung ausgebildeten Dichtelementes 12. Dagegen hat der Axialdichtabschnitt 14 hauptsächlich die Aufgabe, einen Längenausgleich der Bauteile 1,31,32 in Richtung der Symmetrieachse S zu ermöglichen. In den Ausführungsbeispielen nach den FIG 8c und 8d sind die Dichtabschnitte 13,14 jeweils durch separate Ringdichtungen mit rundem bzw. abgewinkeltem oder rechteckigem Querschnitt realisiert.

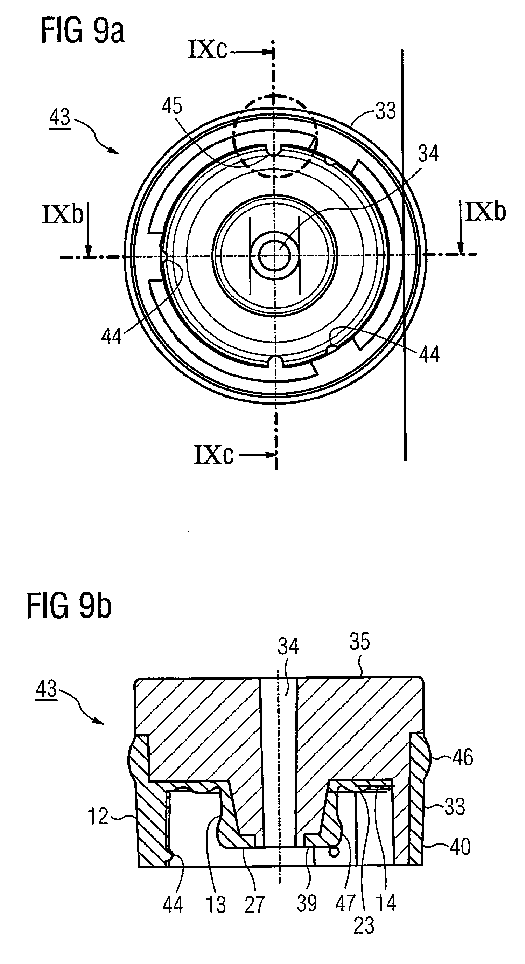

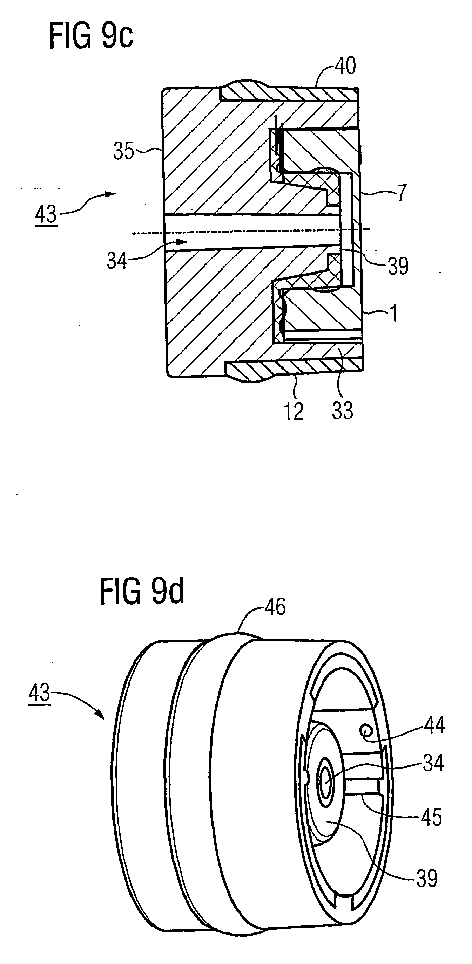

Die FIG 9a bis 9d zeigen ein besonders bevorzugtes Ausführungsbeispiel eines Sockels 43 für ein Sensorelement 1, beispielsweise der in den FIG 8b bis 8d dargestellten Bauart, wobei lediglich in der Anordnung nach Fig. 8c das Sensorelement 1 in den Sockel 43 eingelegt ist. Der Außendichtabschnitt 40 ist in dem dargestellten Ausführungsbeispiel zusammen mit dem Radialdichtabschnitt 13 und dem Axialdichtabschnitt 14 als zusammenhängendes Dichtelement 12 ausgebildet, welches zusammen mit dem Sockel 43 als Zweikomponenten-Spritzteil gefertigt ist. Die Ringwandung 33 des Sockels 43 ist dabei teilweise, in FIG 9b links, vom elastischen Material des Dichtelementes 12 durchdrungen und teilweise, in FIG 9b rechts, lediglich außenseitig von diesem Material umgeben. Auf der Innenseite der Ringwandung 33 befinden sich mehrere Noppen 43 sowie eine Positionierleiste 44 zur definierten winkelgerechten Motage des Sensorelementes 1. Der Außendichtabschnitt 41, welcher an dessen der Frontfläche 35 zugewandter Seite eine als flache Wulst ausgebildete Rippe 46 aufweist, verläuft zur Seite, auf welcher das Sensorelement 1 einlegbar 1 ist, das heißt zur Stirnfläche 39 hin, leicht konisch. In ähnlicher Weise hat der Sockel auch im Bereich des Radialdichtabschnitts 13 eine konische Gestalt, wobei der Radialdichtabschnitts 13 in dessen der Stirnfläche 39 zugewandtem Bereich durch eine Rippe 47 verdickt ist. Bei der Montage der Drucksensor-Anordnung wird zunächst das Sensorelement 1 in den Sockel 43 eingelegt und anschließend dieser in die Aufnahmevorrichtung 5 (FIG 8b bis 8d) eingesetzt.

### Bezugszeichenliste

- 1: Sensorelement
- 2: Trägerkörper
- 3: Gehäuse
- 4: Schrauben
- 5: Vertiefung, Aufnahmevorrichtung
- 6: Zylinderwand
- 7: Bodenfläche
- 8: Durchbruch
- 9: Anschlussdraht
- 10: Innenraum
- 11: Außenraum
- 12: Dichtvorrichtung, Dichtelement
- 13: Radialdichtabschnitt
- 14: Axialdichtabschnitt
- 15: Aussparung
- 16: Ringabschnitt
- 17: Außenring
- 18: Grundplatte
- 19: Schrägdichtabschnitt
- 20: Haltenase
- 21: Membran
- 22: Außenrippe
- 23: Rippe
- 24: Rippe
- 25: Positionieraußenleiste
- 26: Positionierinnenleiste
- 27: Ringdichtabschnitt
- 28: Nut
- 29: Aussparung
- 30: Steuergerät
- 31: Sockel
- 32: Sockel
- 33: Ringwandung
- 34: Bohrung
- 35: Frontfläche
- 36: Hydraulikraum
- 37: Ölraum
- 38: Druckraum
- 39: Stirnfläche
- 40: Außendichtabschnitt
- 41: Außendichtabschnitt
- 42: Umlaufnut
- 43: Sockel
- 44: Noppe
- 45: Positionierleiste
- 46: Rippe
- 47: Rippe

- S: Symmetrieachse

## Patentansprüche

1. Drucksensor-Anordnung mit
• einem Sensorelement (1) mit einer scheibenförmigen oder zylindrischen Grundform,
• einem Trägerkörper (2) mit einer zur Aufnahme des Sensorelementes (1) vorgesehenen, als Vertiefung ausgebildeten Aufnahmevorrichtung (5), welche einen an das Sensorelement (1) angrenzenden Durchbruch (8) aufweist, wobei das Sensorelement (1) einen druckbeaufschlagbaren Innenraum (10) von einem Außenraum (11) trennt,
• einer in der Aufnahmevorrichtung (5) angeordneten Dichtvorrichtung (12), welche einen an das Sensorelement (1) radial anschließenden Radialdichtabschnitt (13) und einen axial in Richtung zum Innenraum (10) an das Sensorelement (1) anschließenden Axialdichtabschnitt (14) aufweist, wobei der Radialdichtabschnitt (13) und der Axialdichtabschnitt (14) als einstückiges Dichtelement (12) ausgeführt ist.

2. Drucksensor-Anordnung nach Anspruch 1,
**dadurch gekennzeichnet , dass** das Sensorelement (1) ausschließlich vom Innenraum (10) aus in die Aufnahmevorrichtung (5) einlegbar ist.

3. Drucksensor-Anordnung nach Anspruch 1 oder 2,
**dadurch gekennzeichnet , dass** der Radialdichtabschnitt (13) mindestens eine Außenrippe (22) aufweist.

4. Drucksensor-Anordnung nach einem der Ansprüche 1 bis 3,
**dadurch gekennzeichnet , dass** der Axialdichtabschnitt (14) mindestens eine Rippe (23,24) aufweist.

5. Drucksensor-Anordnung nach einem der Ansprüche 1 bis 4,
**dadurch gekennzeichnet , dass** das Dichtelement (12) eine Positionieraußenleiste (25) aufweist.

6. Drucksensor-Anordnung nach einem der Ansprüche 1 bis 5,
**dadurch gekennzeichnet , dass** das Dichtelement (12) eine Positionierinnenleiste (26) aufweist.

7. Drucksensor-Anordnung nach einem der Ansprüche 1 bis 6,
**dadurch gekennzeichnet , dass** das Sensorelement (1) mittels eines Sockels (31,32,43) in der Aufnahmevorrichtung (5) gehalten ist.

8. Drucksensor-Anordnung nach Anspruch 7,
**dadurch gekennzeichnet , dass** der Sockel (31,32,43) innerhalb des Innenraums (10) sowohl an einen an das Sensorelement (1) grenzenden Hydraulikraum (36) als auch an einen Ölraum (37) grenzt.

9. Drucksensor-Anordnung nach Anspruch 7 oder 8,
**dadurch gekennzeichnet , dass** der Sockel (31,32,43) in der Aufnahmevorrichtung (5) das Sensorelement (1) radial umgreift.

10. Drucksensor-Anordnung nach einem der Ansprüche 7 bis 9,
**gekennzeichnet durch** einen den Sockel (31,32,43) radial umgebenden, zwischen diesem und der Aufnahmevorrichtung (5) angeordneten Außendichtabschnitt (40,41).

11. Drucksensor-Anordnung nach Anspruch 10,
**dadurch gekennzeichnet , dass** der Außendichtabschnitt (40,41) radial außerhalb des an das Sensorelement (1) grenzenden Radialdichtabschnitts (13) sowie des Axialdichtabschnitts (14) an den Sockel (31,32,43) grenzt.

12. Drucksensor-Anordnung nach Anspruch 10 oder 11,
**dadurch gekennzeichnet, dass** der Außendichtabschnitt (40,41) zusammen mit dem Radialdichtabschnitt (13.) sowie dem Axialdichtabschnitt (14) einstückig ausgebildet ist.

13. Drucksensor-Anordnung nach Anspruch 12,
**dadurch gekennzeichnet , dass** der Außendichtabschnitt (40,41) zusammen mit dem Radialdichtabschnitt (13) und dem Axialdichtabschnitt (14) sowie dem Sockel (31,32,43) einstückig ausgebildet ist.

14. Drücksensor-Anordnung nach einem der Ansprüche 7 bis 13,
**dadurch gekennzeichnet, dass** der Sockel (31,32,43) eine dem Sensorelement (1) zugewandte Stirnfläche (39) aufweist, mittels welcher der Sockel (31,32,43) durch Druckbeaufschlagung im Innenraum (10) in die dem Außenraum (11) abgewandte Richtung pressbar ist.

## Claims

1. A pressure sensor arrangement with
- a sensor element (1) with a disc-shaped or cylindrical basic form
- a carrier body (2) with a retaining device (5) which is provided to retain the sensor element (1) and is formed as a recess, which comprises a through bore (8) which borders the sensor element (1), wherein the sensor element (1) separates an inner chamber (10), which can be subjected to pressure, from an outer chamber (11)
- a sealing device (12) arranged in a retaining device (5), which comprises a radial sealing section (13) which is radially connected to the sensor element (1) and an axial sealing section (14) which is axially connected in the direction of the inner chamber (10) to the sensor element (1),
wherein the radial sealing section (13) and the axial sealing section (14) are designed as a single-piece sealing element (12).

2. A pressure sensor arrangement according to claim 1,
**characterized in that** the sensor element (1) can be inserted solely from the inner chamber (10) into the retaining device (5).

3. A pressure sensor arrangement according to either of claims 1 or 2,
**characterized in that** the radial sealing section (13) comprises at least one outer rib (22).

4. A pressure sensor arrangement according to any one of claims 1 to 3,
**characterized in that** the axial sealing section (14) comprises at least one rib (23, 24).

5. A pressure sensor arrangement according to any one of claims 1 to 4, **characterized in that** the sealing element (12) comprises an outer positioning bar (25).

6. A pressure sensor arrangement according to any one of claims 1 to 5,
**characterized in that** the sealing element (12) comprises an inner positioning bar (26).

7. A pressure sensor arrangement according to any one of claims 1 to 6,
**characterized in that** the sensor element (1) is held by means of a base (31, 32, 43) in the retaining device (5).

8. A pressure sensor arrangement according to claim 7,
**characterized in that** the base (31, 32, 43) borders within the inner chamber (10) both on a hydraulic chamber (36) which borders on the sensor element (1) and on an oil chamber (37).

9. A pressure sensor arrangement according to either of claims 7 or 8,
**characterized in that** the base (31, 32, 43) radially grips around the sensor element (1) in the retaining device (5).

10. A pressure sensor arrangement according to any one of claims 7 to 9,
**characterized by** an outer sealing section (40, 41) which radially encompasses the base (31, 32, 43), and which is arranged between said base and the retaining device (5).

11. A pressure sensor arrangement according to claim 10,
**characterized in that** the outer sealing section (40, 41) radially borders the base (31, 32, 43) outside of the radial sealing section (13) which borders the sensor element (1) and the axial sealing section (14).

12. A pressure sensor arrangement according to either of claims 10 or 11,
**characterized in that** the outer sealing section (40, 41) together with the radial sealing section (13) and the axial sealing section (14) is formed as a single piece.

13. A pressure sensor arrangement according to claim 12,
**characterized in that** the outer sealing section (40, 41) together with the radial sealing section (13) and the axial sealing section (14) and the base (31, 32, 43) is formed as a single piece.

14. A pressure sensor arrangement according to any one of claims 7 to 13,
**characterized in that** the base (31, 32, 43) comprises a front surface (39) which faces the sensor element (1), by means of which the base (31, 32, 43) can be pressed by applying pressure in the inner chamber (10) into the direction facing away from the outer chamber (11).

## Revendications

1. Dispositif de capteur de pression avec
- un élément capteur (1) avec une forme de base en disque ou en cylindre,
- un corps support (2) avec un dispositif d'accueil (5) prévu pour l'accueil de l'élément capteur (1) formé en creux, lequel dispositif présente une ouverture (8) adjacente à l'élément capteur (1), l'élément capteur (1) séparant un espace intérieur (10) pressurisable d'un espace extérieur (11),
- un dispositif d'étanchéité (12) disposé sur le dispositif d'accueil (5), lequel dispositif d'étanchéité présente une section d'étanchéité radiale (13) rattachée de façon radiale à l'élément capteur (1) et une section d'étanchéité axiale (14) rattachée à l'élément capteur (1) de façon axiale en direction de l'espace intérieur (10), la section d'étanchéité radiale (13) et la section d'étanchéité axiale (14) étant fabriquées comme élément d'étanchéité (12) d'une pièce.

2. Dispositif de capteur de pression selon la revendication 1,
**caractérisé en ce que** l'élément capteur (1) ne peut être inséré dans le dispositif d'accueil (5) qu'à partir de l'espace intérieur (10).

3. Dispositif de capteur de pression selon la revendication 1 ou 2,
**caractérisé en ce que** la section d'étanchéité radiale (13) présente au moins une nervure extérieure (22).

4. Dispositif de capteur de pression selon l'une des revendications 1 à 3,
**caractérisé en ce que** la section d'étanchéité axiale (14) présente au moins une nervure (23, 24).

5. Dispositif de capteur de pression selon l'une des revendications 1 à 4,
**caractérisé en ce que** le dispositif d'étanchéité (12) présente une baguette extérieure de positionnement (25).

6. Dispositif de capteur de pression selon l'une des revendications 1 à 5,
**caractérisé en ce que** le dispositif d'étanchéité (12) présente une baguette intérieure de positionnement (26).

7. Dispositif de capteur de pression selon l'une des revendications 1 à 6,
**caractérisé en ce que** le dispositif d'étanchéité (1) est maintenu dans le dispositif d'accueil (5) au moyen d'un socle (31, 32, 43).

8. Dispositif de capteur de pression selon la revendication 7,
**caractérisé en ce que**, au sein de l'espace intérieur (10), le socle (31, 32, 43) jouxte à la fois une chambre hydraulique (36) jouxtant l'élément capteur (1) et une chambre à huile (37).

9. Dispositif de capteur de pression selon la revendication 7 ou 8,
**caractérisé en ce que** le socle (31, 32, 43) entoure de façon radiale l'élément capteur (1) dans le dispositif d'accueil (5).

10. Dispositif de capteur de pression selon l'une des revendications 7 à 9,
**caractérisé par** une section d'étanchéité extérieure (40, 41) disposée entre le dispositif d'accueil (5) et le socle (31, 32, 43) et entourant celui-ci de façon radiale.

11. Dispositif de capteur de pression selon la revendication 10,
**caractérisé en ce que** la section d'étanchéité extérieure (40, 41) jouxte le socle (31, 32, 43) de façon radiale à l'extérieur de la section d'étanchéité axiale (14) et de la section d'étanchéité radiale (13) jouxtant l'élément capteur (1).

12. Dispositif de capteur de pression selon la revendication 10 ou 11,
**caractérisé en ce que** la section d'étanchéité radiale (40, 41) est formée d'une pièce conjointement avec la section d'étanchéité radiale (13) et avec la section d'étanchéité axiale (14).

13. Dispositif de capteur de pression selon la revendication 12,
**caractérisé en ce que** la section d'étanchéité extérieure (40, 41) est formée d'une pièce conjointement avec la section d'étanchéité radiale (13) et avec la section d'étanchéité axiale (14), ainsi qu'avec le socle (31, 32, 43).

14. Dispositif de capteur de pression selon l'une des revendications 7 à 13,
**caractérisé en ce que** le socle (31, 32, 43) présente une face frontale (39) tournée vers l'élément capteur (1), au moyen de laquelle le socle (31, 32, 43) est compressible dans la direction opposée à l'espace extérieur (11) par pressurisation dans l'espace intérieur (10).
